# EUROPEAN PATENT SPECIFICATION

(11) **EP 2 953 061 B1**
(45) Date of publication and mention of the grant of the patent: **11.12.2019**
(21) Application number: 15170667.8
(22) Date of filing: 04.06.2015
(51) Int. Cl.: G06K 19/08, H04W 4/00, G06K 19/14, H04W 12/06

(54) **ELECTRONIC TAG FOR SAFELY IDENTIFYING A COMPONENT OF A MACHINE, IN PARTICULAR A BEARING, AND RELATED QUALITY CONTROL METHOD**
ELEKTRONISCHEN TAG ZUM SICHEREN ERKENNEN EINE KOMPONENTE EINER MASCHINE, INSBESONDERE EIN LAGER, UND VERWANDTE VERFAHREN ZUR QUALITÄTSKONTROLLE
TAG ÉLECTRONIQUE POUR IDENTIFIER TOUTE SÉCURITÉ UN COMPOSANT D'UNE MACHINE, NOTAMMENT UN PALIER, ET PROCÉDÉ DE CONTRÔLE DE LA QUALITÉ CONNEXES

(30) Priority: 05.06.2014 IT TO20140454
(43) Date of publication of application: 09.12.2015
(73) Proprietor: Aktiebolaget SKF, 415 50 Göteborg (SE)
(72) Inventor: MONTAGNONI, Raffaele, 10064 Pinerolo (TO) (IT); CHIABERGE, Marcello, 10093 Collegno (TO) (IT); RENGA, Flavio, 10154 Torino (IT)
(74) Representative: Tedeschini, Luca

(56) References cited:
- EP-A2- 1 569 166
- CN-A- 101 739 576
- CN-A- 102 542 911
- CN-U- 202 534 270
- US-A1- 2009 218 391
- US-A1- 2013 170 758

## Description

The present invention relates to an electronic tag for certainly identifying a component of a machine, such as for example a bearing. Furthermore, the present invention relates to a quality control method for controlling a component of a machine.

As known, the need to verify the authenticity of the components used, for example during the process of assembling a machine, is particularly felt in industries. For this purpose, the use of radio-frequency identification (RFID) devices is known.

In general, RFID devices, also known as RFID tags, can store data and transmit the stored data to a so-called reader when queried by the reader itself; furthermore, RFID devices are configured to communicate in wireless mode.

For example, patent EP1615091 describes a machine component, which comprises a RFID tag therein, which, in turn, comprises a chip and an antenna, connected to the chip; the chip stores information related to such a component.

Although the use of RFID type technologies actually allows to associate useful identification data with each component, RFID tags may be cloned, e.g. by a counterfeiter. In such a case, the counterfeiter reads the data stored on the RFID tag associated with an original component and then associates a new RFID tag, on which the previously read data are stored, with the counterfeited product. Thereby, when a third party reads the data stored on the RFID tag of the counterfeited component they will believe that the component is original.

US 2009/218391 discloses a method of identifying or authenticating a product by providing an analog identification indicia including a randomized pattern of identification features on a first part of the product, wherein one or more attributes of the randomized pattern of identification features correspond to an item identifier. A digital identification record is provided on a second part of the product including an encoded digital version of the item identifier. The product is viewed from two angles and confirmation of the information from both angles assures product authenticity.

EP 1569166 discloses techniques to enable utilization of randomly-occurring features of a label to provide counterfeit-resistant and/or tamper-resistant labels. More specifically, labels including randomly-occurring features are scanned to determine the labels' features. The information from the scan is utilized to provide identifying indicia which uniquely identifies each label and may be later verified against the label features that are present to determine whether the label is genuine.

It is the object of the present invention to provide an electronic tag which at least partially solves the drawbacks of the prior art.

A system and a quality control method as defined in the appended claims are provided according to the present invention.

For a better understanding of the invention, embodiments thereof will be described hereafter only by way of non-limitative example, with reference to the accompanying drawings, in which:
- figure 1 diagrammatically shows a side view of an embodiment of the present electronic tag;
- figures 2 and 13 show block charts of electronic units of embodiments of the present electronic tag;
- figures 3, 6, 11 and 15 show block charts of tag readers;
- figures 8, 19, 20 and 21 show block charts of electronic units of embodiments of the present electronic tag coupled to corresponding tag readers;

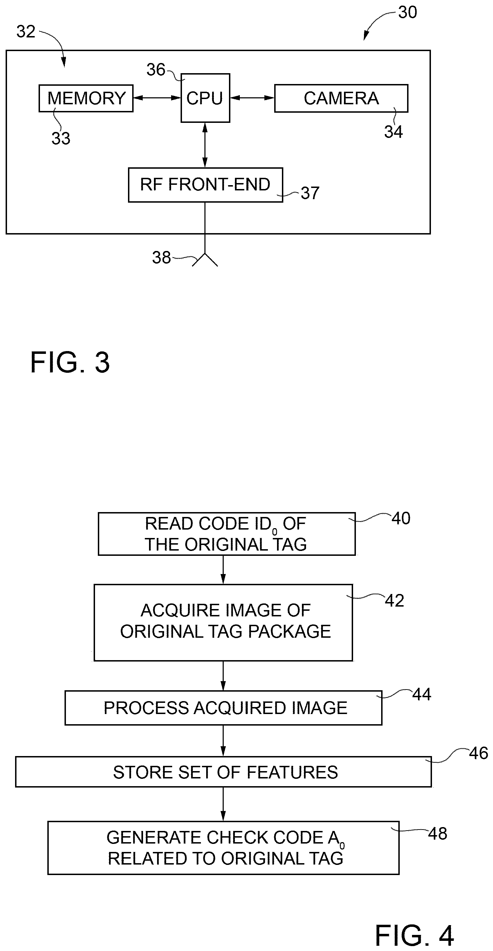

- figures 4, 5, 7, 10a-10b, 12a-12b, 14, 16, 17 and 18 show flow charts of the operations performed during the embodiments of the present quality control method; and

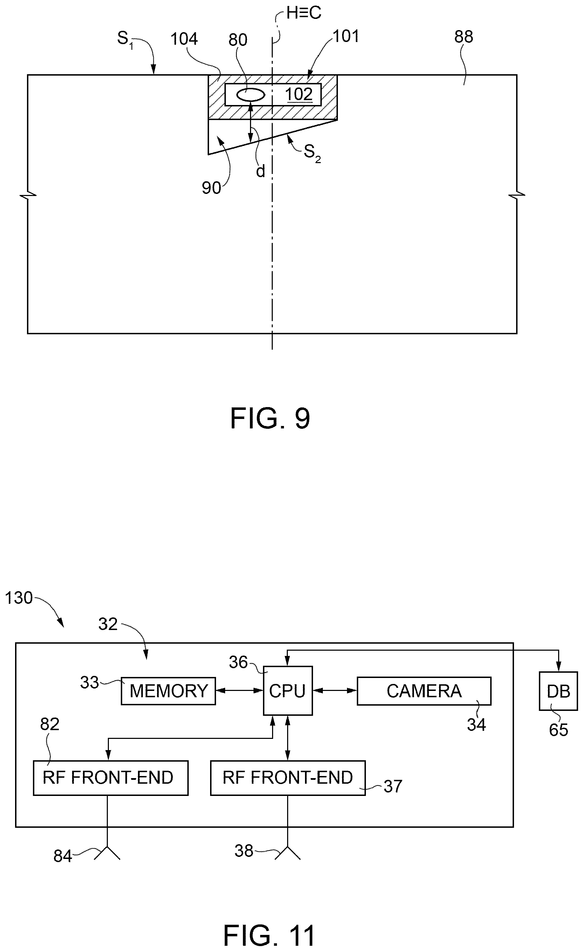

- figure 9 diagrammatically shows a cross section of a component of a machine, to which an electronic tag is coupled.

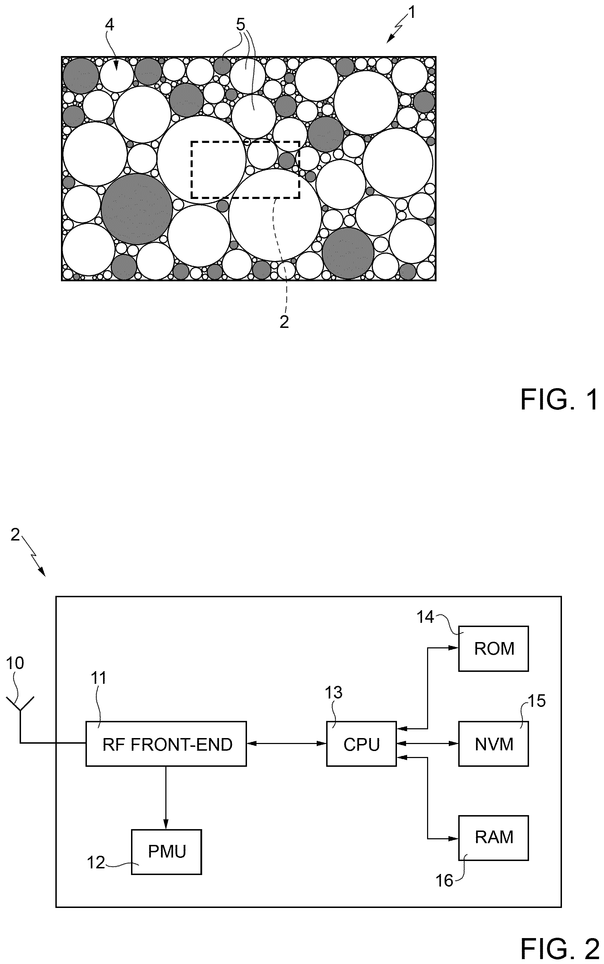

Figure 1 shows a tag 1 for identifying a component of a machine, which will be referred to hereinafter as original tag 1.

In detail, the original tag 1 comprises an electronic unit 2, shown only in terms of quality in figure 1, and a package 4, which surrounds the electronic unit 2.

Package 4 is made of at least two different materials, which have different colors. By way of example, in the embodiment shown in figure 1, package 4 is formed by granules 5 of substantially spherical shape, which are mixed and thus arranged in a random, i.e. non controlled, manner. For example, package 4 may be formed by means of injection molding.

The granules 5 have variable size; furthermore, each granule 5 is alternatively made of a first, or a second material. By way of example, the first material is white and the second material is black; thus, package 4 forms a random optical pattern. In all cases, embodiments are possible in which the package is formed, for example, by co-molding pigmented particles in suspension in a transparent matrix. Furthermore, other embodiments are also possible, in which the optical pattern of package 4 is formed, for example by black lines on white background, which mutually intersect; again by way of example, further embodiments are possible in which the optical pattern is zebra-striped and is thus formed by a plurality of white regions, each of which is, by first approximation, stripe-shaped, which are spaced out by a plurality of black regions, each of which are, by first approximation, stripe-shaped.

As shown in figure 2, the electronic unit 2 of the original tag 1 comprises an antenna 10, which will be referred to hereinafter as tag antenna 10, a radio-frequency interface 11, which will be referred to hereinafter as tag interface 11, a power management unit 12 and a processing unit 13, which will be referred to hereinafter as tag processing unit 13; furthermore, the electronic unit 2 comprises a non-rewritable memory 14, a rewritable memory 15 of non-volatile type and a volatile memory 16, e.g. of the random access type. With this regard, it is worth noting that when the original tag 1 is manufactured, the non-rewritable memory 14 is set so as to store a code which univocally identifies (unless it is counterfeited) the original tag 1, which will be referred to hereinafter as code ID₀.

In detail, the tag interface 11 is electrically connected to the tag antenna 10. Furthermore, the tag interface 11 is electrically connected to the power management unit 12 and to the tag processing unit 13.

The tag processing unit 13 is electrically connected in a two-way manner to the non-rewritable memory 14, to the rewritable memory 15 and to the volatile memory 16.

In practice, when the signal of known type, which will be referred to hereinafter as a reading or writing signal, is received by the tag antenna 10, it is sent to the tag interface 11, which generates a first and a second intermediate signal, directed to the power management unit 12 and to the tag processing unit 13, respectively. Furthermore, the power management unit 12 can supply the electronic unit 2, on the basis of the power extracted from the first intermediate signal and stored by the power management unit 12 itself; with this regard, the power management unit 12 is electrically connected also to the tag processing unit 13, to the non rewritable memory 14, to the rewritable memory 15 and to the volatile memory 16, although these connections are not shown for the sake of simplicity.

As described below, the tag processing unit 13 performs reading or writing operations as a function of the second intermediate signal, which varies as a function of whether the tag antenna 10 receives a reading signal or a writing signal. For practical purposes, the second intermediate signal conveys the same information as the signal received by the tag antenna 10.

For practical purposes, the original tag 1 may cooperate with the device shown in figure 3; in particular, figure 3 shows a device 30, which is referred to hereinafter as tag reader 30, which comprises an RFID reader 32, of type known per se, and a camera 34.

In detail, the RFID reader 32 comprises a memory 33, which will be referred to hereinafter as reader memory 33, and a processing unit 36, which will be referred to hereinafter as reader processing unit 36, which is electrically connected to the reader memory 33 and to camera 34 in a two-way manner. Furthermore, the RFID reader 32 comprises a respective radio-frequency interface 37, which will be referred to hereinafter as reader interface 37, which is electrically connected to the reader processing unit 36 in a two-way manner. Additionally, the RFID reader 32 comprises a respective antenna 38, which will be referred to hereinafter as reader antenna 38; the reader antenna 38 is electrically connected to the reader interface 37. Again, the RFID reader 32 may comprise a supply stage of type known per se (not shown).

In greater detail, as previously mentioned, the RFID reader 32 may send a reading signal by means of its reader antenna 38, which encodes, i.e. transmits, a reading address, relative for example to a portion of the non-rewritable memory 14 or of the rewritable memory 15, which will also be referred to as address contained in the reading signal. When the original tag 1 receives the reading signal, it is energized and sends to the RFID reader 32, by means of the tag antenna 10, a reply signal, which is received by the RFID reader 32 by means of the reader antenna 38. The reply signal contains, for example, according to the reading address contained in the previously sent reading signal, the code ID₀ stored in the non-rewritable memory 14, or data stored in a portion of the rewritable memory 15. The reader processing unit 36 thus acquires code ID₀, or data stored in the rewritable memory 15. In general, the verbs "acquire" and "read", when referred to the reader processing unit 36, imply the at least temporary storing of the acquired/read quantities, e.g. in memory 33.

In a manner known per se, the RFID reader 32 may also send, by means of the reader antenna 38, a writing signal, which encodes, and thus transmits, a writing address, e.g. relative to a portion of the rewritable memory 15, and data to be written, which will also be referred to as address and data contained in the writing signal. The original tag 1 is energized when it receives the writing signal by means of the tag antenna 10; furthermore, the tag processing unit 13 writes the data to be written in the portion of the rewritable memory 15 having address equal to the writing address. The tag reader 30 thus also works as writing device of the original tag 1.

Camera 34 is controlled by the reader processing unit 36, which controls so that it acquires an image of the original tag 1, and in particular of package 4. The acquired image is transmitted by camera 34 to the reader processing unit 36, allowing it to be acquired also by the latter.

In general, hereinafter reference is made to the reading operation by the tag reader 30 to indicate the (known) operations which allow the reader processing unit 36 to read, and thus acquire, data stored in the rewritable memory or in the non-rewritable memory of any tag. Furthermore, hereinafter, reference is made to the writing operation by the tag reader 30 to indicate the (known) operations which allow to write any data in the rewritable memory of any tag.

This said, as shown in figure 4, the tag reader 30 may be electromagnetically coupled to the original tag 1, to generate a numeric code, which will be referred to hereinafter as check code A₀.

In detail, the tag reader 30 reads (block 40) code ID₀ stored in the non-rewritable memory 14 of the original tag 1. Furthermore, the reader processing unit 36 acquires (block 42) the image of the package 4 of the original tag 1 by means of camera 34.

The reader processing unit 36 then processes (block 44) the acquired image, so as to determine a set of features of the image, in a manner known per se. For this purpose, the reader processing unit 36 performs an image processing algorithm, of type known per se. For example, in the case of package 4 formed by granules 5, the reader processing unit 36 may determine the coordinates on a xy plane of the centers of the white/black circles of the granules 5 visible in the acquired image, which is assumed to have been taken from top view, or in all cases may be taken from any view, and then processed to correct perspective distortion. Furthermore, the reader processing unit 36 may determine the radii of such circles. Alternatively, if the package has, for example, mutually intersecting lines, the reader processing unit 36 may determine, for example, the coordinates on the xy plane of the intersection points of the lines. In general, when the optical pattern of package 4 is random, the set of features of the image forms a set of stochastic, i.e. random, quantities.

Hereinafter, the reader processing unit 36 stores (block 46) the set of previously determined features.

The reader processing unit 36 then generates (block 48) the aforesaid check code A₀, on the basis of the set of features and of code ID₀, by applying any first transform algorithm. For example, the set of features may be converted into a corresponding numeric quantity, which is then added to code ID₀; for example, with regards to the conversion of the set of features, the corresponding numeric quantity may be obtained, in the case of granular package, by adding up all the x and y coordinates of the centers of the previously determined circles, and the corresponding radii. In all cases, the details related to the transform may be varied as desired.

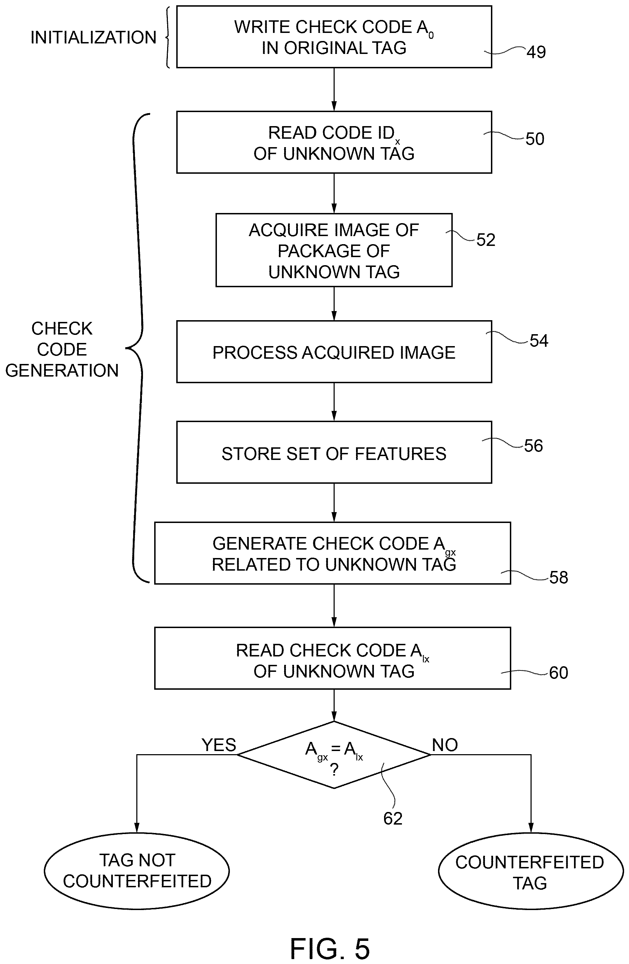

This said, given a generic tag of unknown provenience, the operations shown in figure 5 can be performed, in order to verify whether such a generic tag, which will be referred to hereinafter as unknown tag, is a counterfeited tag.

In detail, after having generated the aforesaid check code A₀, thus after having performed the operations described with reference to figure 4, the tag reader 30 writes (block 49) the check code A₀ in the rewritable memory 15 of the original tag 1 so as to initialize the original tag 1. Without any loss of generality, it is assumed that the writing occurs at a predetermined address of the rewritable memory 15, which will be referred to hereinafter as the check address.

Hereafter, during the step of checking of the possible counterfeiting of the unknown tag, the tag reader 30 generates the check code relative to the unknown tag, which will be referred to hereinafter as generated check code A_{gx}. For this purpose, the following operations are performed in sequence:
- the tag reader 30 reads (block 50) the ID code stored in the non-rewritable memory of the unknown tag, which will be referred to hereinafter as IDₓ code;
- the reader processing unit 36 acquires (block 52) the image of the package of the unknown tag, by means of camera 34;
- the reader processing unit 36 processes (block 54) the acquired image, so as to determine a corresponding set of features, obtained by applying the aforesaid image processing algorithm;
- hereinafter, the reader processing unit 36 stores (block 56) the determined set of features;
- the reader processing unit 36 generates (block 58) the aforesaid check code A_{gx}, on the basis of the set of features related to the image of the package of the unknown tag and of code IDₓ, and applying the first transform algorithm in block 48; and then
- the tag reader 30 reads (block 60) the check code stored in the check address of the unknown tag, which will be referred to hereinafter as read check code Aₗₓ,

Hereinafter, the reader processing unit 36 compares (block 62) the read check code Aₗₓ with the generated check code A_{gx}, which, as previously explained, is a function of code IDₓ and of the optical pattern of the package of the unknown tag.

If the generated check code A_{gx} is equal to the read check code Aₗₓ (YES output of block 62), it means that the unknown tag is not counterfeited. For example, IDₓ=ID₀ may occur if the unknown tag coincides with the aforesaid original tag 1.

If the generated check code A_{gx} is different from the read check code Aₗₓ (YES output of block 62), it means that the unknown tag is counterfeited. In a manner known per se, the generated check code A_{gx} and the read check code Aₗₓ may be considered equal, if they differ by less than a predetermined tolerance.

More in detail, should a counterfeiter have created the unknown tag by cloning the original tag 1, the counterfeiter will have inserted an ID code equal to ID₀ in the non-rewritable memory of the unknown tag and will have further stored a check code equal to the check code A₀ stored in the check address of the rewritable memory 15 of the original tag 1 at the check address of the rewritable memory of the unknown tag. Therefore, Aₗₓ=A₀ occurs. However, because the optical pattern of the package of the unknown tag is different from the optical pattern of the package 4 of the known tag 1, *A_{gx}* ≠ *A*₀ occurs, thus *A_{gx}* ≠ *Aₗₓ.* The counterfeiting is thus detected following the check in block 62.

Again, the operations performed by the tag reader on the unknown tag, in figure 5 and hereinafter in the present description unless otherwise specified, are described with reference to the case in which the unknown tag is of the same type as the original tag 1 (i.e. has the same memory structure, meaning set of memory locations and corresponding addresses), i.e. assuming that the described operations may be actually performed. In actual fact, for example the reading of the check code Aₗₓ in block 60 comprises sending a reading signal to the reading address equal to the check address, but the actual sending of the reply signal by the unknown tag depends, for example, on the presence of a memory portion having address equal to the check address; thus, such a sending cannot occur, for example, if the unknown tag is an approximate counterfeited tag. Similarly, the reading of the IDₓ code in block 50 comprises sending a reading signal with a reading address equal to the address of the non-rewritable memory 14; thus, such a sending cannot produce any reply signal by the unknown tag, for example if it is counterfeited. In practice, particularly approximate counterfeiting may be immediately apparent even without performing all the operations described in figure 5, or in the subsequent figures, thus determining an early interruption of the operation flow.

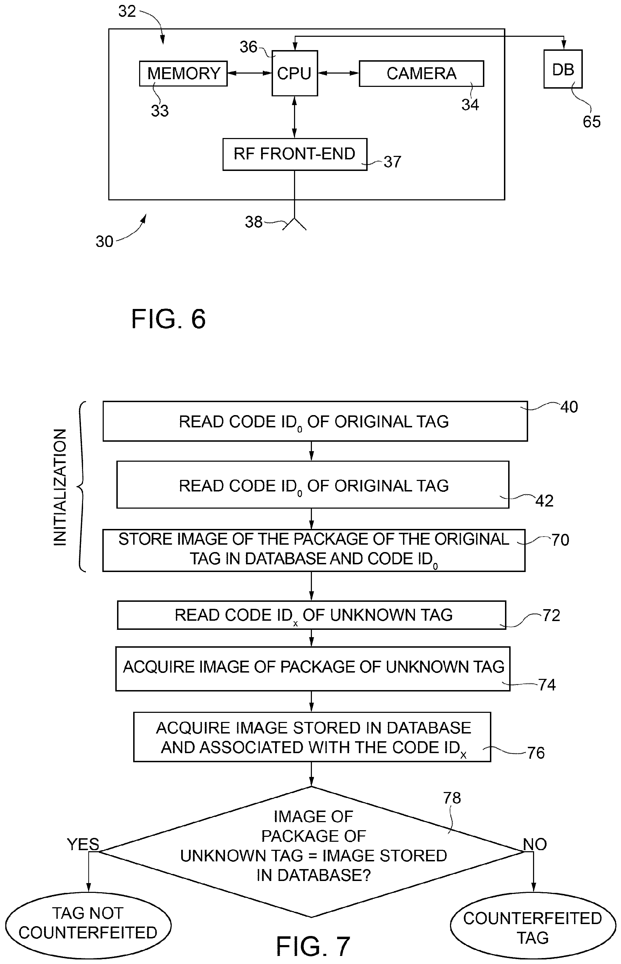

According to a variant shown in figure 6, the reader processing unit 36 is electrically connected in a two-way manner to a database 65. For this purpose, the operations shown in figure 7 may be performed in order to check whether the unknown tag is counterfeited.

In detail, the original tag 1 is initialized by performing the operations in blocks 40 and 42, which include, as mentioned, reading the code ID₀ of the original tag 1 and acquiring an image of the package 4 of the original tag 1; furthermore, the initialization operations include that the reader processing unit 36 stores (block 70) the image of the package 4 of the original tag 1, associating it with code ID₀, in database 65.

Hereinafter, the tag reader 30 performs the operations in blocks 50 and 52, hereinafter indicated by reference numerals 72 and 74, and i.e. reads the code IDₓ stored in the non-rewritable memory of the unknown tag and acquires the image of the package of the unknown tag, by means of camera 34.

The tag reader 30, and in particular the reader processing unit 36, then queries the database 65, so as to acquire (block 76) the image stored in database 65 and associated with code IDₓ.

Hereinafter, the reader processing unit 36 compares (block 78) the image of the package of the unknown tag, acquired during the operations in block 74, with the aforesaid image stored in database 65, acquired during the operations in block 76.

If the image of the package of the unknown tag is equal to the image stored in database 65 and associated with code IDₓ (YES output of block 78), means that the unknown tag is not counterfeited; conversely, if the image of the package of the unknown tag is different from the image stored in database 65 and associated with code IDₓ (NO output of block 78), it means that the unknown tag is counterfeited. In order to perform the check in block 78, the reader processing unit 36 may, for example, determine and then mutually compare the two sets of features related to the two images to be compared by adopting the aforesaid image processing algorithm. For example, if the unknown tag coincides with the original tag 1, IDₓ=ID₀ occurs; furthermore, the image acquired during the operations in which block 74 coincides with the image contained in database 65 and associated with code IDₓ=ID₀.

According to a further variant, the sets of features of the images instead of the whole images are stored in database 65.

Other embodiments equal to the previously described embodiments are also possible, in which the first transform algorithm does not use any ID code; in such a case, given a set of features of a tag, the corresponding check code depends on such a set of features, but not on the ID code of the tag. Therefore, the operations in blocks 40, 50 and 72 become optional.

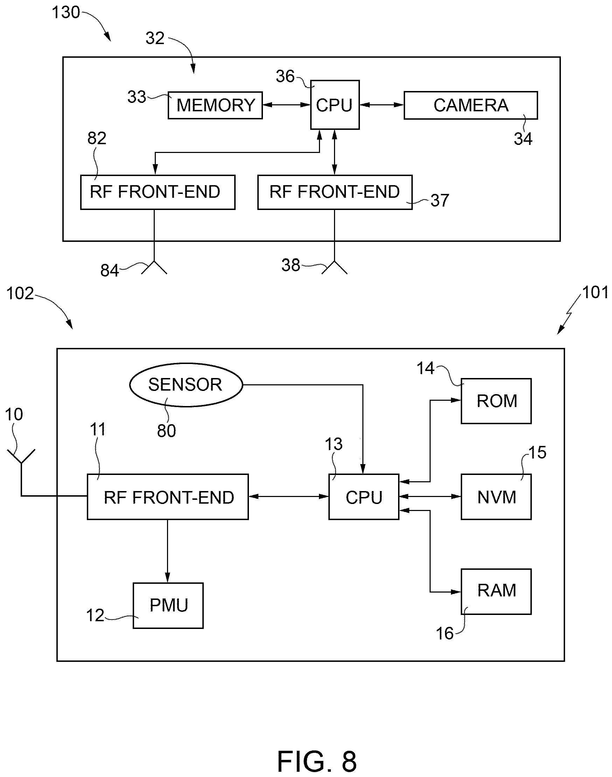

A different embodiment is shown in figure 8; in particular, figure 8 shows the original tag, indicated herein by reference numeral 101, and the tag reader, indicated herein by reference numeral 130.

In detail, the electronic unit of the original tag 101, indicated by reference numeral 102, comprises a sensor 80; furthermore, the package of the original tag 101 (shown in figure 9) is externally cylinder-shaped and is indicated herein by reference numeral 104. Additionally, the package 104 may not display any random optical pattern; preferably, the package 104 has a uniform color, in order to avoid presenting signs which allow to identify the reciprocal arrangement between the original tag 101 and the package 104.

By indicating with C the longitudinal axis of the cylinder defined by the package 104, sensor 80 is arranged at a distance from axis C, thus not in axial position; furthermore, sensor 80 is electrically connected to the tag processing unit 13.

Additionally, according to such an embodiment, the tag reader 130 comprises a further radio-frequency interface 82 and a further antenna 84, which are referred to hereinafter as safety interface 82 and safety antenna 84, respectively.

In greater detail, sensor 80 is a distance sensor of the type known per se, e.g. of the inductive or capacitive type; furthermore, the tag reader 130 can transmit a perturbation signal, by means of the safety antenna 84, such that, the other conditions being equal, the distance measurement from sensor 80 varies according to whether the perturbation signal is present on sensor 80 or not.

As shown in figure 9, the original tag 1 is fixed, in use, to a component of a machine 88, which will be referred to hereinafter as component 88. By way of example only, the component 88 may be formed by a bearing or by a portion thereof.

The component 88 forms a recess 90, which in top view has a circular symmetry about an axis H. In particular, the recess 90 has a cylindrical top portion, which faces a front surface S₁ of a portion of the component 88, such a front surface S₁ being planar; furthermore, the recess 90 has a lower portion, arranged under the top position, which is delimited on the bottom by a lower surface S₂, which is flat and arranged transversely with respect to the front surface S₁ and axis H. In other words, the recess 90 is shaped as a truncated cylinder portion obtained by intersecting a cylinder with the plane on which the lower surface S₂ lays.

This said, the original tag 101 is arranged so that the package 104 completely fills the top portion of the recess 90, without penetrating inside the lower portion of the recess 90, which may thus remain empty or be filled, for example, with a dielectric resin (case not shown). Thereby, the axis C of package 104 coincides with the axis H of recess 90.

In greater detail, sensor 80 is a distance sensor of the type known per se, which provides the tag processing unit 13 with a signal indicative of a distance measurement d present between sensor 80 and the vertically aligned point of the lower surface S₂, i.e. aligned along axis C, with respect to sensor 80. In practice, the distance d depends on how the original tag 101, and in particular the package 104, is fixed to the component 88, because it depends on the angular position of the package 104 with respect to axis H. Thus, by coupling the package 104 to the recess 90 in a substantially random manner, i.e. with an uncontrolled rotation about H, the distance d is a stochastic, i.e. random, quantity. Hereinafter, we will assume to fix the original tag 101 so that d=d₀.

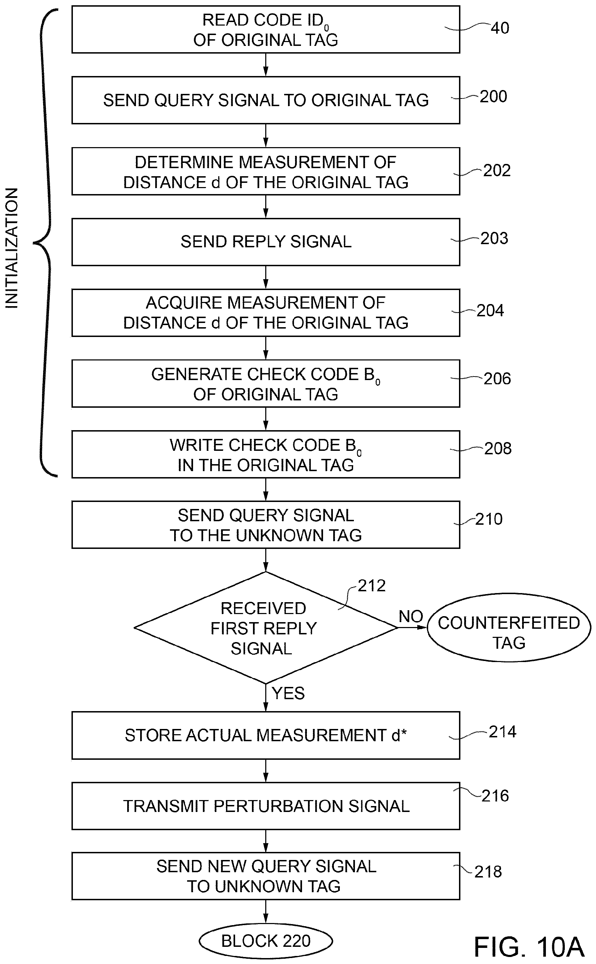

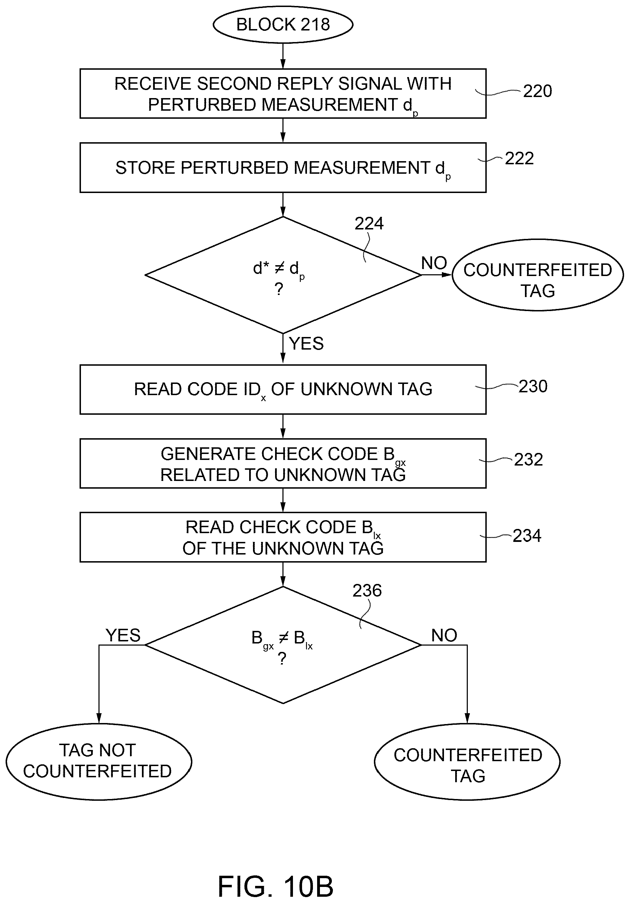

This said, given the embodiment shown in figures 8 and 9, a possible quality control method is shown in figures 10a and 10b.

In detail, the tag reader 30 performs the operations in block 40, i.e. reads the code ID₀ stored in the non-rewritable memory 14 of the original tag 1.

The tag reader 130 then sends (block 200) a querying signal to the original tag 104, fixed on the component 88, which determines (block 202) the distance measurement d, i.e. d₀, by cooperating with sensor 80, as explained above and not necessarily dependently from the reception of the querying signal. Furthermore, the distance measurement d may be temporarily stored in the volatile memory 16, or in a portion of the rewritable memory 15. In this case, the query signal is formed by a reading signal containing a reading address equal to the address of the memory portion in which the distance measurement d is stored.

The original tag 104 then sends (block 203) a reply signal to the tag reader 130, which contains the distance measurement d. Therefore, the reader processing unit 36 acquires (block 204) the distance measurement d.

Then, the reader processing unit 36 generates (block 206) a check code B₀, on the basis of the set of features and of code ID₀, by applying any second transform algorithm. For example, the check code B₀ may be obtained by adding code ID₀, which is of the numeric type, and d₀; other embodiments are however possible, in which the second transform algorithm is of the different type.

The tag reader 130 then writes (block 208) the check code B₀ in the rewritable memory 15 of the original tag 101, and in particular without any loss of generality in the portion of rewritable memory 15 having address equal to the check address, so as to initialize the original tag 101.

Then, in presence of a unknown component, to which an unknown tag is fixed, it is possible to verify the authenticity by performing the following operations, illustrated again in figures 10a and 10b.

In detail, the tag reader 130 sends (block 210) a query signal to the unknown tag, and checks (block 212) to have received a corresponding reply signal from the unknown tag, which is referred to hereinafter as a first reply signal.

If no first reply signal is received (NO output of block 212), it means that the unknown tag is counterfeited.

Conversely, if a first reply signal is received (YES output of block 212), the tag reader 130 stores (block 214) the distance measurement contained in the first reply signal in memory 33, which is referred to hereinafter as actual measurement d*. For example, if the unknown tag coincides with the original tag 101, d*=d₀ occurs.

The tag reader 130 then transmits (block 216) the aforesaid perturbation signal.

Furthermore, the tag reader 130 sends (block 218) a new query signal to the unknown tag, so receive (block 220) a second reply signal containing a new distance measurement from the unknown tag, which is referred to hereinafter as perturbed measurement dₚ. With this regard, although for the sake of simplicity the operations of block 218 are shown in figure 10a as subsequent to those of block 216, the transmission of the perturbation signal lasts until the second reply signal is received, so as to perturb sensor 80 in an effective manner, if the unknown tag coincides with the original tag 101.

The tag reader 130 then stores (block 222) the perturbed measurement dₚ in memory 33 and compares (block 224) the actual measurement d* with the perturbed measurement dₚ.

If the perturbed measurement dₚ is equal to the actual measurement d* (NO output of block 224), it means that the unknown tag is counterfeited. In practice, the operations in blocks 216-224 allow to detect the presence/absence of sensor 80 on the unknown tag.

Conversely, if the perturbed measurement dₚ is different from the actual measurement d* (YES output of block 224), the tag reader 130 performs the operations of block 50, hereinafter indicated as 230, i.e. reads the code ID stored in the non-rewritable memory of the unknown tag, which is referred to again as code IDₓ.

The reader processing unit 36 then generates (block 232) a check code B_{gx}, on the basis of the actual measurement d* and the code IDₓ, and by applying the aforesaid second transform algorithm.

Then, the tag reader 130 reads (block 234) the check code stored in the check address of the unknown tag, which will be referred to hereinafter as read control code Bₗₓ,

The reader processing unit 36 then compares (block 236) the read check code Bₗₓ, with the generated check code B_{gx}, which, as previously explained, is as a function of code IDₓ and of the actual measurement d*.

If the generated check code B_{gx} is the same as the read check code Bₗₓ (YES output of block 236), it means that the unknown tag and the unknown component are not counterfeited. Thus, IDₓ=ID₀ and d*=d₀ may occur, for example, if the unknown tag coincides with the original tag 101.

Conversely, if the generated check code B_{gx} is different from the read check code Bₗₓ (NO output of block 236), it means that the unknown tag and the unknown component are counterfeited.

In practice, if the unknown tag was created by cloning the original tag 101 and was then fixed to a counterfeit product, it occurs that i) code ID₀ is present in the non-rewritable memory of the counterfeit tag, and ii) check code B₀ is present in the portion of rewritable memory of the unknown tag having address equal to the check address; so, Bₗₓ=B₀ occurs. However, since the unknown tag is coupled to the unknown component inevitably in a different manner with respect to how the original tag 101 is coupled to the original component 88, *B_{gx}* ≠ *Bₗₓ* occurs; the counterfeiting is thus detected.

In practice, the procedure shown in figures 10a and 10b allows to check the authenticity of the unknown tag, but also to verify the authenticity of the unknown component, because a random quantity is used which refers to the mechanical coupling between the package 104 and the component 88; a possible operation of uncoupling of the original tag 101 from the component 88 and of subsequent fixing to a non-genuine component would inevitably cause a cause of the distance d and would thus be detected, as described above.

Other embodiments equal to the embodiment shown in figures 8-10b are possible, in which the second transform algorithm does not use any code ID; in such a case, given a generic tag, the corresponding check code depends on the distance d which characterizes the coupling with the corresponding component but not the code ID of the tag. Therefore, the operations in blocks 40 and 230 become optional.

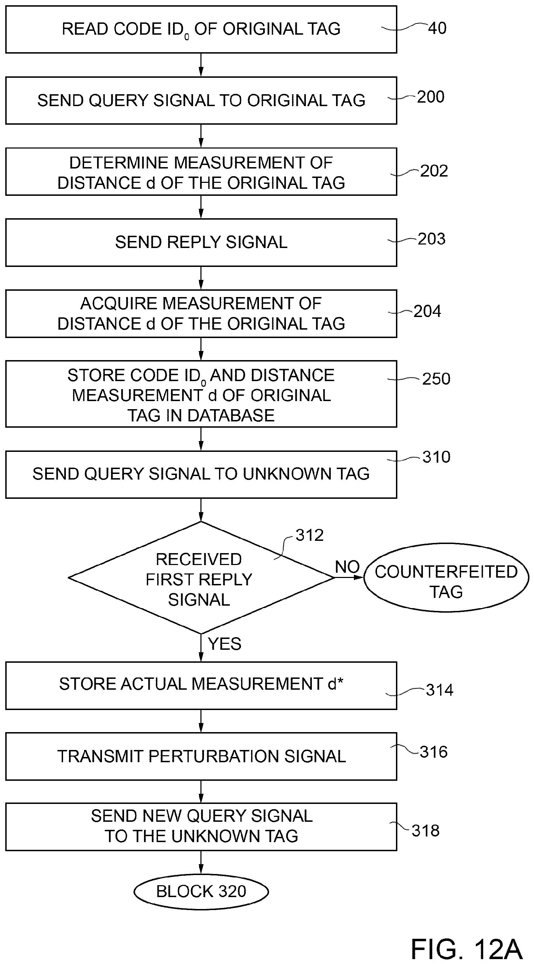

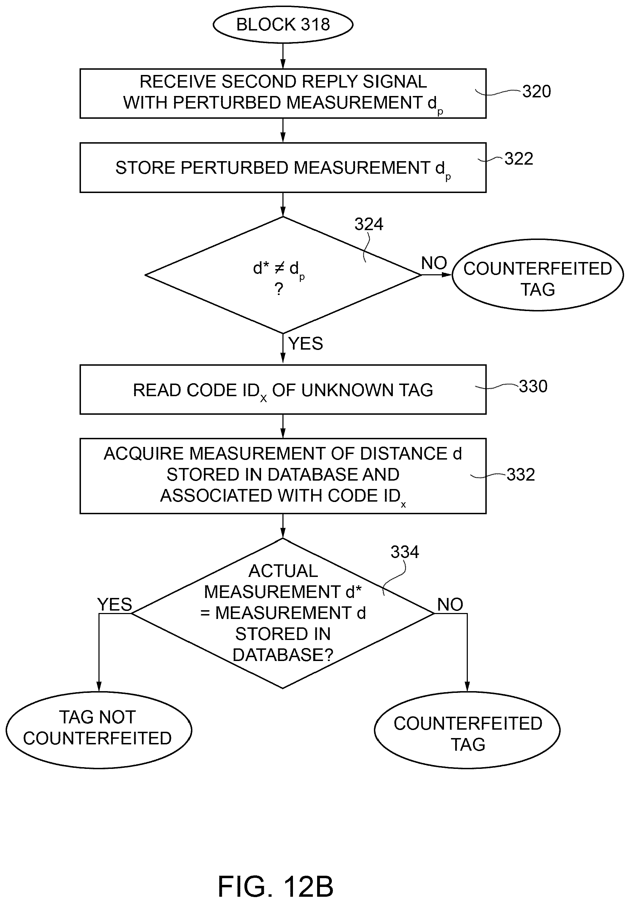

According to a variant shown in figure 11, the processing unit 36 of the tag reader 130 is connected to database 65. Thereby, the quality control method shown in figures 12a and 12b may be performed.

In detail, the original tag 1 is initialized by performing the operations in blocks 40, 200, 202, 203 and 204 in sequence.

The reader processing unit 36 (block 250) then stores the distance measurement d thus obtained, equal to d₀, in database 65, by associating it with code ID₀.

Hereinafter, the tag reader 130 performs the operations in blocks 212, 214, 216, 218, 220, 222, 224 and 230, hereinafter indicated as 312, 314, 316, 318, 320, 322, 324 and 330, respectively. Thereby, the reader processing unit 36 acquires the code IDₓ of the unknown tag and the actual measurement d*.

Then, the tag reader 130, and in particular the reader processing unit 36, queries the database 65, so as to acquire (block 332) the distance measurement d stored in database 65 and associated with the acquired code IDₓ.

The reader processing unit 36 then compares (block 334) the aforesaid distance measurement d stored in database 65 with the actual measurement d*.

If the distance measurement d stored in database 65 is different from the actual measurement d* (NO output of block 334), it means that the tag and the component are counterfeited. Conversely, if the distance measurement d stored in database 65 is equal to the actual measurement d* (YES output of block 334), it means that the tag and the component are original.

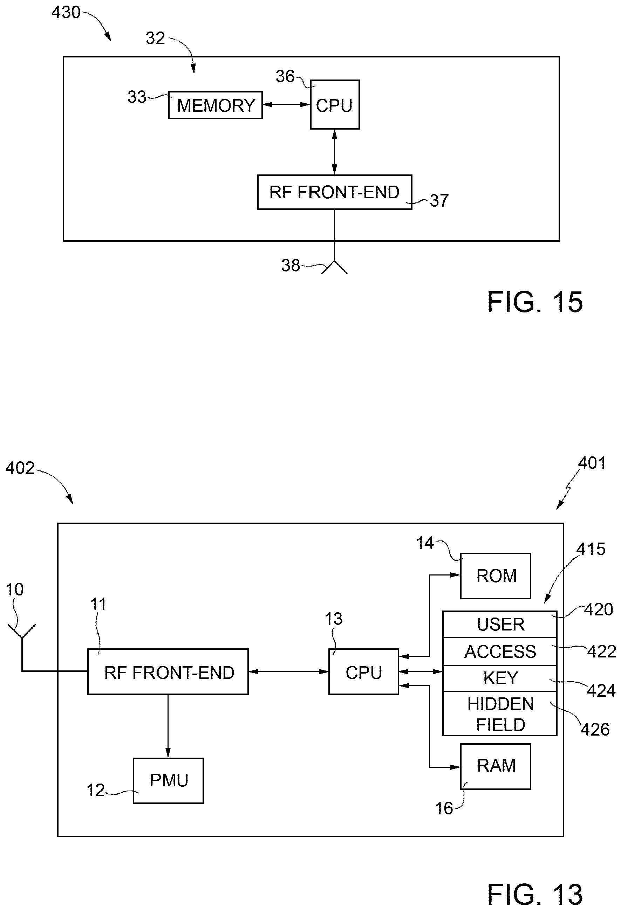

Figure 13 shows a further embodiment, wherein the original tag is indicated by reference numeral 401; furthermore, the package, which may be of traditional type and thus monochromatic, for example, is not shown in figure 13. Furthermore, the tag electronic unit is indicated by reference numeral 402.

According to such an embodiment, the rewritable memory, indicated with reference numeral 415, comprises the following portions: a first portion 420, which will be referred to hereinafter as user portion 420; a second portion 422, which will be referred to hereafter as access portion 422; a third portion 424, which will be referred to hereinafter as key portion 424; and a fourth portion 426, which will be referred to hereinafter as hidden field 426. The code ID₀ of the original tag 401 is still stored in the non-rewritable memory 14; furthermore, the access portion 422 stores a number of writings NUMW, initialized to zero. Again, as described in greater detail hereinafter, the hidden field portion 426 is accessible, i.e. may be written or read only if a data which satisfies a ratio is present in the key portion 424.

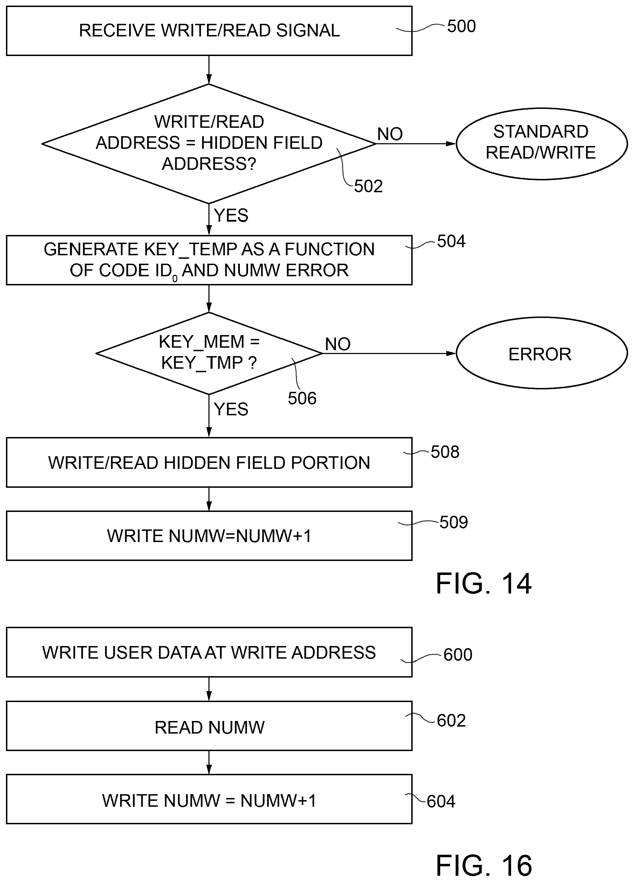

This said, the original tag 401, and in particular the tag processing unit 13, is configured so as to perform the operations described in figure 14, which are described with reference to the case in which the original tag 401 is coupled to the tag reader 430 shown in figure 15, which is equal to the tag reader shown in figure 3, but is free from camera 34.

In detail, when the original tag 401 receives (block 500) a write or read signal, it checks (block 502) whether the address contained in the write or read signal is equal to the address of the hidden field portion 426.

If the address contained in the write or read signal is different from the address of the hidden field portion 426 (NO output of block 502), the tag processing unit 13 performs a standard writing or reading operation. In particular, the standard reading operation is a known type reading operation as described above; the standard writing operation comprises the following operations, shown in figure 16:
- the tag reader 430 performs a writing operation (block 600) at the writing address in a manner known per se;
- the tag reader 430 reads (block 602) the number of writings NUMW stored in the access position 422, which will be referred to hereinafter as previous number of writings; and
- the tag reader 430 writes (block 604) a new number of writings NUMW, equal to the previous number of writings, increased by one unit in the access portion 422.

Again with reference to block 502 in figure 14, if the writing or reading address contained in the writing signal is equal to the address of the hidden field portion 426 (YES output of block 502), the tag processing unit 13 generates (block 504) a reference key KEY_TMP, as a function of the number of writings NUMW stored in the access portion 422 and of the code ID₀ stored in the non-rewritable memory 14. In particular, the reference key KEY_TMP is generated by applying a third transform algorithm, which, by way of example, provides for the reference key KEY_TMP to be equal to the sum of the number of writings NUMW and the code ID₀.

The tag processing unit 13 then checks (block 506) whether the data contained in the key portion 424, which will be referred to hereinafter as stored key KEY_MEM, is equal to the reference key KEY_TMP.

If the stored key KEY_MEM is different from the reference key KEY_TMP (NO output of block 506), the tag processing unit 13 transmits an error signal, and in all cases does not perform any writing or reading operation.

If the stored key KEY_MEM is equal to the reference key KEY_TMP (YES output of block 506), the tag processing unit 13 writes or reads (block 508) the hidden field portion 426. Hereinafter, if the operations in block 508 are writing operations, the tag reader 430 performs the operations in block 604, hereinafter indicated by reference numeral 509, i.e. writes a new number of writings NUMW, equal to the previous number of writings, increased by one unit, in the access portion 422.

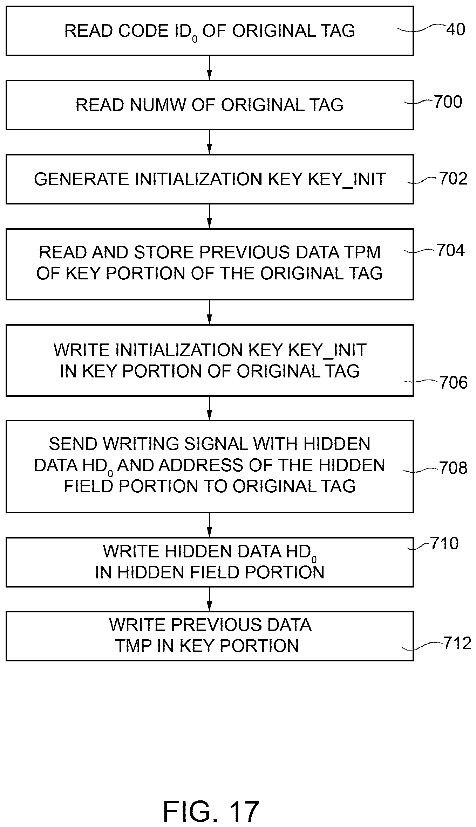

This said, the quality control method described below, which includes initializing the original tag 401, may be implemented by performing the operations shown in figure 17.

In detail, the tag reader 430 performs the operations in block 40, thus reads the code ID₀ of the original tag 401.

Hereinafter, the tag reader 430 reads (block 700) the number of writings NUMW stored in the access position 422 of the original tag 401.

The reader processing unit 36 then generates (block 702) a check code, which will be referred to hereinafter as initialization key KEY_INIT, by applying the aforesaid third transform algorithm, as a function of code ID₀ and the read number of writings NUMW.

Hereinafter, the tag reader 430 reads and stores (block 704) the data stored in key portion 424, which is referred to hereinafter as previous data TMP temporarily in memory 33.

The tag reader 430 then writes (block 706) the initialization key KEY_INIT in the key portion 424.

Then, the tag reader 430 sends (block 708) a writing signal, which contains a corresponding data to be written and a writing address equal to the address of the hidden field portion 426, to the original tag 401; the data to be written is any data, preferably non null, to which reference is made hereinafter as predetermined hidden data HD₀.

The reception by the original tag 401 of the aforesaid writing signal causes to perform (not shown in figure 17) the operations in blocks 500, 502, 504, 506, 508 and 509 because the check in block 506 has provided positive result (KEY_MEM=KEY_INIT=KEY_TMP indeed occurs); thus, the predetermined hidden data HD₀ is written (block 710) in the hidden field portion 426.

The tag reader 430 then writes (block 712), i.e. restores, the aforesaid previous data TMP in the key portion 424. Thereby, the hidden field portion 426 is no longer accessible because KEY_MEM=TMP≠KEY_TMP occurs.

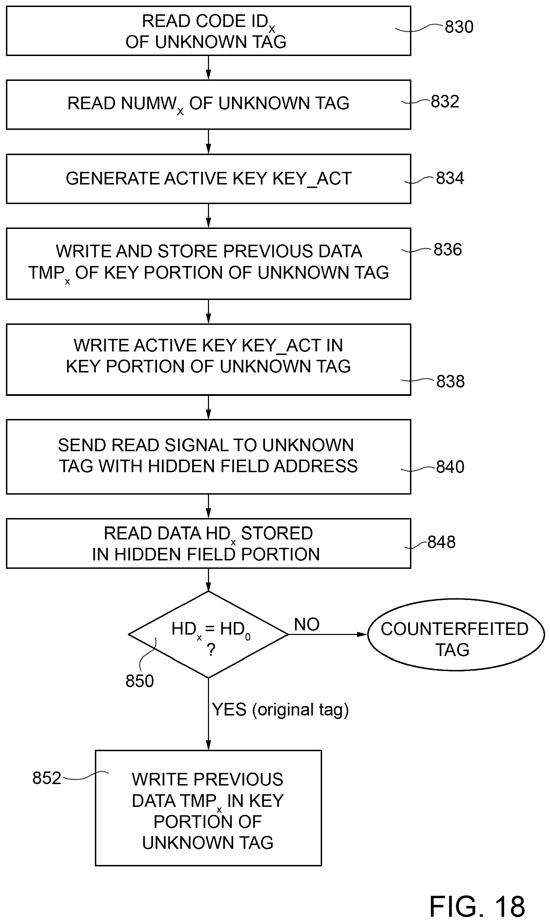

This said, in presence of an unknown tag, the authenticity may be verified by performing the operations shown in figure 18.

In detail, the tag reader 430 performs the operations of block 50, hereinafter indicated as 830, i.e. reads the code ID stored in the non-rewritable memory of the unknown tag, which will be referred to again as code IDx.

The tag reader 430 then reads (block 832) the number of writings NUMW stored in access portion 422 of the unknown tag, which will be referred to hereinafter as number of writings NUMWₓ.

The reader processing unit 36 then generates (block 834) a check code, which will be referred to hereinafter as active key KEY_ACT, by applying the aforesaid third transform algorithm, as a function of code IDₓ and the number of read writings NUMWₓ.

Hereinafter, the tag reader 430 temporarily reads and stores (block 836) the data stored in key portion of the unknown tag, which is referred to hereinafter as previous data TMPₓ, in memory 33.

The tag reader 430 then writes (block 838) the active key KEY_ACT in the key portion of the unknown tag.

Hereinafter, the tag reader 430 sends (block 840) a reading signal to the unknown tag, which contains an address equal to the address of the hidden field portion 426 of the original tag 401.

The reception, by the original tag 410, of the aforesaid reading signal causes the performance (not shown in figure 17) of the operations in blocks 500, 502, 504 and 506. So, if the unknown tag is the original tag 401, and it was read/written as described above (see figure 16 in particular), the hidden field portion 426 can be accessed for reading, because KEY_MEM=KEY_ACT=KEY_TEMP occurs; thus, the tag reader 430 reads (block 848) the data stored in the hidden field portion 426, which is referred to hereinafter as read data HDₓ. Alternatively, an error signal is generated (case not shown in figure 18), indicative of the fact that the unknown tag is counterfeited.

The tag processing unit 36 then checks (block 850) whether the read hidden data HDₓ is equal to the predetermined hidden data HD₀.

If the read hidden data HDₓ is different from the predetermined hidden data HD₀ (NO output of block 850), it means that the unknown tag is counterfeited. Conversely, if the read hidden data HDₓ is equal to the predetermined HD₀ (NO output of block 850), it means that the unknown tag is counterfeited.

Finally, the tag reader 430 writes (block 852) the previous data TMPx in the key portion 424 of the unknown tag again to make the hidden field portion 426 non accessible again.

In all cases, different embodiments are possible in which the third transform algorithm used to determine the aforesaid initialization key KEY_INIT, reference key KEY_TMP and active key KEY_ACT, is different from that described. For example, the third algorithm may be based on the code ID and on the number of access to the hidden field portion 426 only, or may be based on the code ID only, in which case there is no evolution of the reference key KEY_TMP over time; however, preferably the third transform algorithm is such to cause an evolution of the keys over time so as to implement a sort of rolling code. In general, the third transform algorithm, and thus, among other things, the reference key KEY_TMP, may be based, in addition to the code ID, on data, which is referred to as seed, which is stored, for example, in the access portion 422 of the rewritable memory 415 and is dynamically updated by the tag processing unit 13, preferably at least after each writing operation in the rewritable memory 15. By way of example only, the seed may be updated as a function of the data written in the hidden field portion 426.

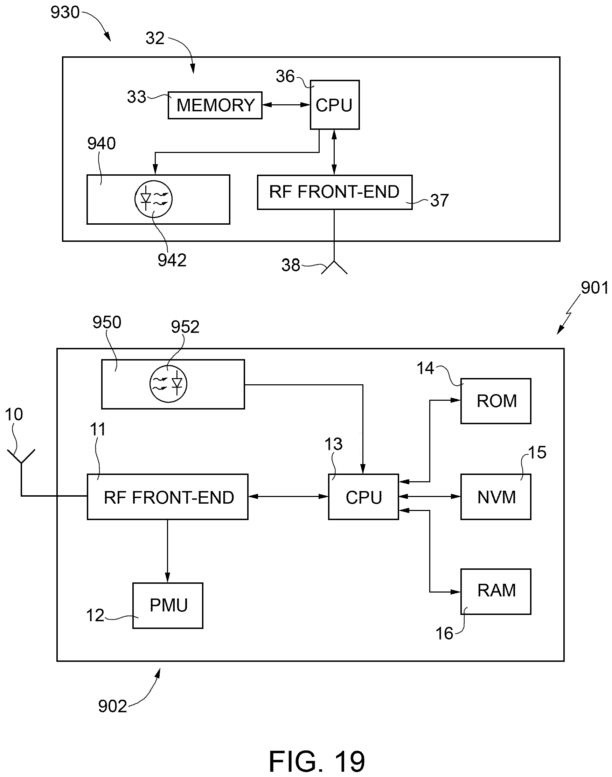

A further embodiment is shown in figure 19, wherein the original tag, the electronic unit of the original tag and the tag reader indicated as 901, 902 and 930, respectively; furthermore, by way of non-binding example, the rewritable memory 15 of the original tag 901 is of the type shown in figure 2, while the tag reader 930 is free from the camera; the package (not shown) may be of any type, also of known type.

In detail, the tag reader 930 comprises an optical interface 940 connected to the tag processing unit 36, which is referred to hereinafter as optical reader interface 940; furthermore, the electronic unit 902 of the original tag 901 comprises a further optical interface 950 connected to the tag processing unit 13, which is referred to hereinafter as optical tag interface 950.

The optical reader interface 940 comprises an optical source 942 (e.g. a LED or a laser), which is referred to hereinafter as optical reader source 942.

The optical reader source 942 is apt to generate, for example, an optical reading signal or an optical writing signal, which contain the same information as the corresponding signals transmitted by means of the radio-frequency interface 37 and described above. With this regard, hereinafter the absence of the adjective "optical", with reference for example to the reading and writing signals indeed implies that the signals to which reference is made are radio-frequency signals; furthermore, in some passages reference to radio-frequency is explicitly expressed where useful to facilitate understanding. Additionally, the expression "optical signal" means a signal formed by electromagnetic radiation with wavelength comprised between 10nm and 1mm, and more preferably between 700nm and 3µm.

The optical tag interface 950 comprises an optical receiver 952 (e.g. a photodiode), which is referred to hereinafter as optical tag receiver 952.

The optical tag receiver 952 is apt to receive the optical reading or writing signal sent by the optical reader interface 940, and to provide converted reading signals or converted writing signals, of electrical type, respectively, to the tag processing unit 13. Furthermore, the tag processing unit 13 is configured to perform the reading operation (thus to send the reply signal) and the writing operation only after having received the converted reading signals and the converted writing signals. In case of reading, the reply signal is again sent by means of the tag interface 11 and the tag antenna 10.

In greater detail, each optical reading/writing signal is transmitted by the tag reader 930 substantially simultaneously with the corresponding radio-frequency reading/writing signal, so that the latter energize the original tag 901; however, as mentioned, the corresponding second intermediate signals output by the tag interface 11, which are referred to hereinafter as second intermediate signals, are ignored by the tag processing unit 13, which thus does not perform any access to the non-rewritable memory 14, or to the rewritable memory 15, or to the volatile memory 16. This means that a possible counterfeiter who uses radio-frequency reading/writing signals of type known in themselves will not be able to interact with the original tag 901 and thus cannot clone it.

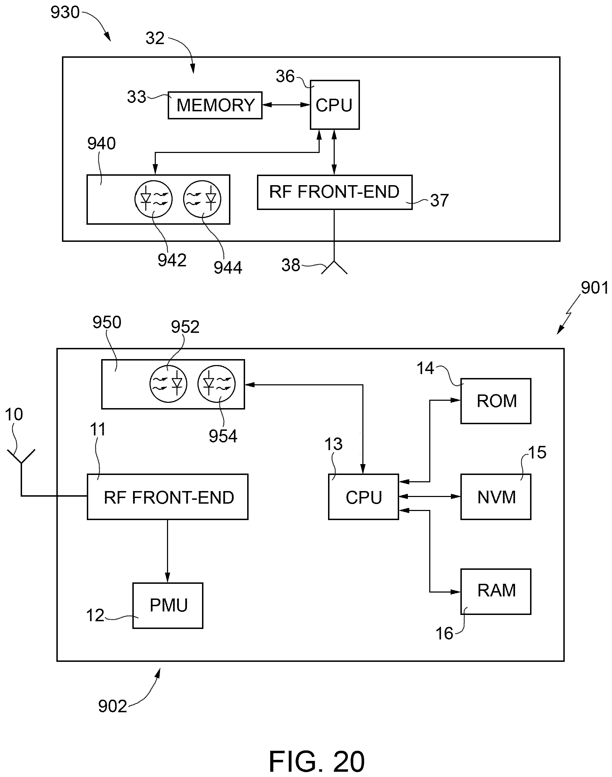

According to a different embodiment, shown in figure 20, the optical reader interface 940 and the optical tag interface 950 respectively comprise a corresponding optical receiver 944 (e.g. a photo diode), which is referred to hereinafter as optical reader receiver 944, and a corresponding optical source 954 (e.g. an LED or a laser), which is referred to hereinafter as optical tag source 954.

Thereby, after having received an optical reading signal, the tag processing unit 13 optically transmits the reply signal by means of the optical tag source 954; the optical reply signal is thus received by the optical receiver of reader 944.

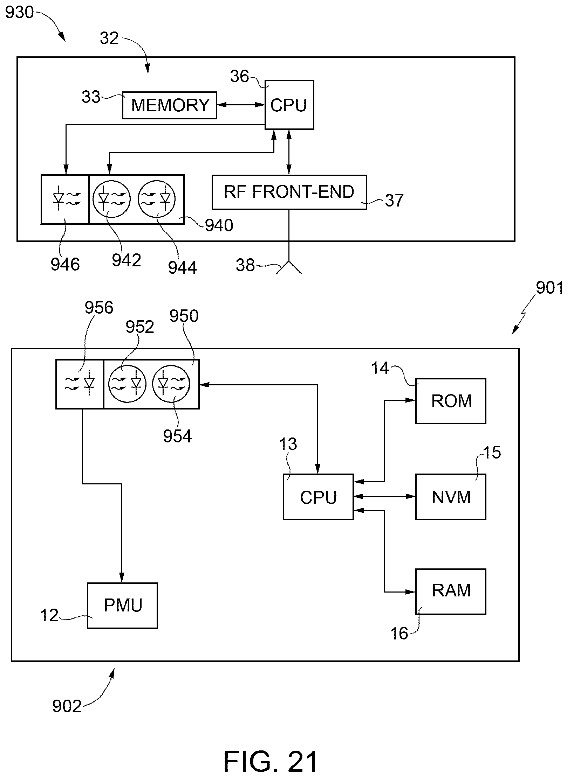

According to a yet different embodiment, shown in figure 21, the tag reader 930 comprises a further optical source (e.g., an LED or a laser) 946, which is controlled by the reader processing unit 36, and which is referred to hereinafter as optical supply source 946. The optical supply source 946 emits an optical supply signal, preferably not modulated. The reader interface 37 and the reader antenna 38 are optional.

The original tag 901 comprises a further optical receiver (e.g. a photodiode) 956 and is preferably free from the tag antenna 10 and the radio-frequency tag interface 11. Reference is made hereinafter to the aforesaid further optical receiver 956 as optical supply receiver 956.

The optical supply receiver 956 is connected to the power management unit 12 and is apt to receive the optical supply signal so that the power management unit 12 extracts and stores power from the optical supply signal, after having converted the latter from the optical domain to the electrical domain, such a conversion being indeed operated by the optical supply receiver 956. Thereby, the original tag 901 is optically energized.

Although the technique of supplying the original tag 901 optically was shown with reference to the case in which the optical reader interface 940 and the optical tag interface 950 comprise the optical reader receiver 944 and the optical tag source 954, respectively, other hybrid embodiments (not shown) are also possible of the type shown in figure 19 (thus, free from the optical receiver 944 and the optical tag source 954), but energized optically in all cases.

In practice, the use of optical radio-frequency radiation instead of radio-frequencies allows to optimize the communications between the tag reader and the electronic tag, especially if the latter is fixed to a metal component, which may cause a decay of the radiation pattern of the tag antenna.

Furthermore, hybrid embodiments of the type shown in figure 1-18 are possible, but in which the reading signals and the writing signals sent by the tag reader are of optical type; in such a case, also the reply signals sent by the original tag may be of optical type. Furthermore, independently from the electromagnetic nature of the reading, writing and reply signals, the original tag may be energized optically as described above.

The advantages that the present electronic tag and the present quality control method allow to obtain are clearly apparent from the description above. In particular, the present electronic tag allows to implement the described quality control methods, which are methods which allow, for example, to track an original tag and/or a component coupled thereto.

Finally, it is apparent that changes and variants may be made to the electronic tag and the quality control method described hereto without because of this departing from the scope of protection of the appended claims.

For example, the order according to which the operations are performed may be different from that shown and described; furthermore, some operations described as subsequent may be performed at least in part simultaneously.

Although explicit reference was made in the present description to the case of passive tags, which are energized from the outside, possible corresponding embodiments are possible in which the tags are active, i.e. have batteries, for example.

Information (e.g. data, ID codes, check codes, keys etc.) may be stored differently from that illustrated. Furthermore, there could be memories of different type and/or number than that described.

Furthermore, the signals exchanged between tag reader and tag could be encrypted at least in part.

With regards to the embodiment shown in figure 1, the packing 4 may comprise an at least two-color film and/or a transparent protective coating to protect the integrity of the random optical pattern.

Furthermore, the described quality control method may include further operations, for example apt to implement tamper protection, of type known in themselves. For example, the original tag may be constrained to the machine component so as to guarantee the damaging of the package if one attempts to uncouple the original tag from the machine component, with consequent damage of the optical pattern, with reference, for example, to the embodiment shown in figure 1.

Relating to the embodiment shown in figure 9, possible variants are shown in which the recess is cylinder-shaped, with base having a smaller area than the area of the base of the package, and is filled with a resin in which particles are dispersed. If sensor 80 is of capacitive type, such particles have different dielectric constant with respect to the dielectric constant of the resin; conversely, if sensor 80 is of inductive type, the particles are metallic. In such a case, sensor 80 measures the (random) distance of the particles from the bottom wall of the recess instead. Additionally, sensor 80 can be queried directly by the tag reader 130, in which case it sends a corresponding reply message to the tag reader 130.

Finally, with regards to the embodiments shown in figures 20 and 21, the reply signals can be transmitted alternatively by means of the radio-frequency tag interface 11 or by means of the optical tag interface 950, e.g. as a function of the memory portion to which they refer.

## Claims

1. A system comprising an electronic tag and a component (88) of a machine, wherein said tag is constrainable to the component, said electronic tag comprising:
- a package (4; 104) mechanically coupled to the component (88);
- a first memory portion (14), which is adapted to store an identification code of the electronic tag; and
- a second memory portion (14, 16), which is adapted to store a check code, which is a function of at least one stochastic quantity related to said package (4; 104);
**characterized in that** said at least one stochastic quantity is related to the mechanical coupling between the package (104) and the component (88).

2. The system according to claim 1, wherein said check code is also a function of the identification code of the electronic tag (1).

3. The system according to claim 1 or 2, wherein said at least one stochastic quantity comprises a distance (d) between the package (104) and the component (88).

4. The system according to any of the preceding claims, wherein the electronic tag (101) comprises a sensor (80) configured to provide a measurement of said stochastic quantity related to the mechanical coupling between the package (104) and the component (88); and wherein said check code is a function of said measurement of the stochastic quantity related to the mechanical coupling between the package (104) and the component (88).

5. The system according to claim 4, wherein the check code of the electronic tag (101) depends on the measurement of the stochastic quantity related to the mechanical coupling between the package (104) and the component (88) on the basis of a second algorithm, said system further comprising a tag reader (130) configured to be electromagnetically coupled to an unknown tag mechanically coupled to an unknown component, said tag reader (130) comprising:
- a detection unit (32) configured to detect the presence of a sensor in the unknown tag;
- a measurement unit (32) configured to acquire a measurement of a quantity related to the mechanical coupling between the package of the unknown tag and the unknown component, said measurement being generated by the sensor of the unknown tag;
- a reading unit (32) configured to read a check code stored in the unknown tag;
- a processing unit (36) configured to generate a check code related to the unknown tag, on the basis of the second algorithm and of the acquired measurement of the quantity related to the mechanical coupling between the package of the unknown tag and the unknown component, said processing unit (36) being further configured to compare the generated check code to the read check code.

6. A method for controlling the quality of a component (88) of a machine, comprising the steps of:
- providing an electronic tag (1 ;101) comprising a package (4;104), a first memory portion (14), in which an identification code of the electronic tag (1 ;101) is stored, and a second memory portion (14,16);
- mechanically coupling the package (104) of the electronic tag (101) to the component (88);
- generating (48,206) a check code, as a function of at least one stochastic quantity related to the package (4; 104); and
- storing the check code in the second memory portion (14,16); **characterized in that** said at least one stochastic quantity relates to the mechanical coupling between the package (104) of the electronic tag (101) and the component (88).

7. The method according to claim 6, further comprising the step of reading (40) the identification code of the electronic tag (1;101); and wherein said step of generating (48,206) a check code is also performed as a function of the identification code of the electronic tag (1).

8. The method according to claim 6 or 7, wherein said step of generating (206) a check code comprises:
- determining (202) a measurement of said stochastic quantity related to the mechanical coupling between the package (104) and the component (88); and
- performing a second algorithm (48; 58) based on said measurement of the stochastic quantity related to the mechanical coupling between the package (104) and the component (88);
said method further comprising the steps of:
- determining (214) a measurement of a quantity related to a mechanical coupling between the package of an unknown tag and an unknown component;
- reading (232) a check code stored in the unknown tag;
- generating (234) a check code related to the unknown tag, on the basis of the second algorithm and of the measurement of the quantity related to the mechanical coupling between the package of the unknown tag and the unknown component; and
- comparing (236) the generated check code to the read check code.

9. The method according to claim 8, wherein said step of determining (202) a measurement of said stochastic quantity related to the mechanical coupling between the package (104) and the component (88) is performed by means of a sensor (80) of the electronic tag (101); said method further comprising the step of detecting (212-224) the presence of a sensor of the unknown tag, said step of determining (214) a measurement of a quantity related to the mechanical coupling between the package of the unknown tag and the unknown component being performed by means of the sensor of the unknown tag.

## Patentansprüche

1. System, das ein elektronisches Etikett und ein Bauteil (88) einer Maschine umfasst, wobei das Etikett an dem Bauteil festgemacht werden kann, wobei das elektronische Etikett Folgendes umfasst:
- eine Hülle (4; 104), die mit dem Bauteil (88) mechanisch gekoppelt ist;
- einen ersten Speicherabschnitt (14), der ausgelegt ist, einen Identifikationscode des elektronischen Etiketts zu speichern;
- einen zweiten Speicherabschnitt (14, 16), der ausgelegt ist, einen Prüfcode zu speichern, der von wenigstens einer stochastischen Größe abhängt, die sich auf die Hülle (4; 104) bezieht;
**dadurch gekennzeichnet, dass** sich die wenigstens eine stochastische Größe auf die mechanische Kopplung zwischen der Hülle (104) und dem Bauteil (88) bezieht.

2. System nach Anspruch 1, wobei der Prüfcode außerdem von dem Identifikationscode des elektronischen Etiketts (1) abhängt.

3. System nach Anspruch 1 oder 2, wobei die wenigstens eine stochastische Größe einen Abstand (d) zwischen der Hülle (104) und dem Bauteil (88) umfasst.

4. System nach einem der vorhergehenden Ansprüche, wobei das elektronische Etikett (101) einen Sensor (80) umfasst, der konfiguriert ist, eine Messung der stochastischen Größe, die sich auf die mechanische Kopplung zwischen der Hülle (104) und dem Bauteil (88) bezieht, bereitzustellen; und wobei der Prüfcode von der Messung der stochastischen Größe, die sich auf die mechanische Kopplung zwischen der Hülle (104) und dem Bauteil (88) bezieht, abhängt.

5. System nach Anspruch 4, wobei der Prüfcode des elektronischen Etiketts (101) von der Messung der stochastischen Größe abhängt, die sich auf die mechanische Kopplung zwischen der Hülle (104) und dem Bauteil (88) auf der Basis eines zweiten Algorithmus bezieht, wobei das System ferner eine Etikett-Ausleseeinheit (130) umfasst, die so konfiguriert ist, dass sie mit einem unbekannten Etikett, das mit einem unbekannten Bauteil mechanisch gekoppelt ist, elektromagnetisch gekoppelt ist, wobei die Etikett-Ausleseeinheit (130) Folgendes umfasst:
- eine Detektionseinheit (32), die konfiguriert ist, das Vorhandensein eines Sensors in dem unbekannten Etikett zu detektieren;
- eine Messeinheit (32), die konfiguriert ist, eine Messung einer Größe zu erfassen, die sich auf die mechanische Kopplung zwischen der Hülle des unbekannten Etiketts und dem unbekannten Bauteil bezieht, wobei die Messung durch den Sensor des unbekannten Etiketts erzeugt wird;
- eine Ausleseeinheit (32), die konfiguriert ist, einen Prüfcode, der in dem unbekannten Etikett gespeichert ist, auszulesen;
- eine Verarbeitungseinheit (36), die konfiguriert ist, auf der Basis des zweiten Algorithmus und der erfassten Messung der Größe, die sich auf die mechanische Kopplung zwischen der Hülle des unbekannten Etiketts und dem unbekannten Bauteil bezieht, einen Prüfcode zu erzeugen, der sich auf das unbekannte Etikett bezieht, wobei die Verarbeitungseinheit (36) ferner konfiguriert ist, den erzeugten Prüfcode mit dem ausgelesenen Prüfcode zu vergleichen.

6. Verfahren zum Steuern der Qualität eines Bauteils (88) einer Maschine, wobei das Verfahren die folgenden Schritte umfasst:
- Bereitstellen eines elektronischen Etiketts (1; 101), das eine Hülle (4; 104), einen ersten Speicherabschnitt (14), in dem ein Identifikationscode des elektronischen Etiketts (1; 101) gespeichert ist, und einen zweiten Speicherabschnitt (14, 16) umfasst;
- mechanisches Koppeln der Hülle (104) des elektronischen Etiketts (101) mit dem Bauteil (88);
- Erzeugen (48, 206) eines Prüfcodes in Abhängigkeit von wenigstens einer stochastischen Größe, die sich auf die Hülle (4; 104) bezieht; und
- Speichern des Prüfcodes in dem zweiten Speicherabschnitt (14, 16);
**dadurch gekennzeichnet, dass** sich die wenigstens eine stochastische Größe auf die mechanische Kopplung zwischen der Hülle (104) des elektronischen Etiketts (101) und dem Bauteil (88) bezieht.

7. Verfahren nach Anspruch 6, das ferner den Schritt des Auslesens (40) des Identifikationscodes des elektronischen Etiketts (1; 101) umfasst; und
wobei der Schritt zum Erzeugen (48, 206) eines Prüfcodes auch in Abhängigkeit von dem Identifikationscode des elektronischen Etiketts (1) durchgeführt wird.

8. Verfahren nach Anspruch 6 oder 7, wobei der Schritt zum Erzeugen (206) eines Prüfcodes die folgenden Schritte umfasst:
- Ermitteln (202) einer Messung der stochastischen Größe, die sich auf die mechanische Kopplung zwischen der Hülle (104) und dem Bauteil (88) bezieht; und
- Ausführen eines zweiten Algorithmus (48; 58) auf der Basis der Messung der stochastischen Größe, die sich auf die mechanische Kopplung zwischen der Hülle (104) und dem Bauteil (88) bezieht;
wobei das Verfahren ferner die folgenden Schritte umfasst:
- Ermitteln (214) einer Messung einer Größe, die sich auf eine mechanische Kopplung zwischen der Hülle eines unbekannten Etiketts und einem unbekannten Bauteil bezieht;
- Auslesen (232) eines Prüfcodes, der in dem unbekannten Etikett gespeichert ist;
- Erzeugen (234) eines Prüfcodes, der sich auf das unbekannte Etikett bezieht, auf der Basis des zweiten Algorithmus und der Messung der Größe, die sich auf die mechanische Kopplung zwischen der Hülle des unbekannten Etiketts und dem unbekannten Bauteil bezieht; und
- Vergleichen (236) des erzeugten Prüfcodes mit dem ausgelesenen Prüfcode.

9. Verfahren nach Anspruch 8, wobei der Schritt zum Ermitteln (202) einer Messung der stochastischen Größe, die sich auf die mechanische Kopplung zwischen der Hülle (104) und dem Bauteil (88) bezieht, mittels eines Sensors (80) des elektronischen Etiketts (101) durchgeführt wird; wobei das Verfahren ferner den Schritt des Detektierens (212-224) des Vorhandenseins eines Sensors des unbekannten Etiketts umfasst, wobei der Schritt zum Ermitteln (214) einer Messung einer Größe, die sich auf die mechanische Kopplung zwischen der Hülle des unbekannten Etiketts und dem unbekannten Bauteil bezieht, mittels des Sensors des unbekannten Etiketts durchgeführt wird.

## Revendications

1. Système, comprenant une étiquette électronique et un composant (88) d'une machine, ladite étiquette étant susceptible d'être astreinte au composant, ladite étiquette électronique comprenant :
- un conditionnement (4 ; 104) couplé mécaniquement au composant (88) ;
- une première partie de mémoire (14), laquelle est adaptée à stocker un code d'identification de l'étiquette électronique ; et
- une deuxième partie de mémoire (14, 16), laquelle est adaptée à stocker un code de vérification, lequel est fonction d'au moins une quantité stochastique liée audit conditionnement (4 ; 104) ;
**caractérisé en ce que** ladite au moins une quantité stochastique est liée au couplage mécanique entre le conditionnement (104) et le composant (88).

2. Système selon la revendication 1, dans lequel ledit code de vérification est également fonction du code d'identification de l'étiquette électronique (1).

3. Système selon la revendication 1 ou 2, dans lequel ladite au moins une quantité stochastique comprend une distance (d) entre le conditionnement (104) et le composant (88).

4. Système selon l'une quelconque des revendications précédentes, dans lequel l'étiquette électronique (101) comprend un capteur (80) configuré pour fournir une mesure de ladite quantité stochastique liée au couplage mécanique entre le conditionnement (104) et le composant (88) ; et dans lequel ledit code de vérification est fonction de ladite mesure de la quantité stochastique liée au couplage mécanique entre le conditionnement (104) et le composant (88).

5. Système selon la revendication 4, dans lequel le code de vérification de l'étiquette électronique (101) dépend de la mesure de la quantité stochastique liée au couplage mécanique entre le conditionnement (104) et le composant (88) sur la base d'un deuxième algorithme, ledit système comprenant en outre un lecteur d'étiquette (130) configuré pour se coupler électromagnétiquement à une étiquette inconnue couplée mécaniquement à un composant inconnu, ledit lecteur d'étiquette (130) comprenant :
- une unité de détection (32) configurée pour détecter la présence d'un capteur dans l'étiquette inconnue ;
- une unité de mesure (32) configurée pour acquérir une mesure d'une quantité liée au couplage mécanique entre le conditionnement de l'étiquette inconnue et le composant inconnu, ladite mesure étant générée par le capteur de l'étiquette inconnue ;
- une unité de lecture (32) configurée pour lire un code de vérification stocké dans l'étiquette inconnue ;
- une unité de traitement (36) configurée pour générer un code de vérification lié à l'étiquette inconnue, sur la base du deuxième algorithme et de la mesure acquise de la quantité liée au couplage mécanique entre le conditionnement de l'étiquette inconnue et le composant inconnu, ladite unité de traitement (36) étant configurée en outre pour comparer le code de vérification généré au code de vérification lu.

6. Procédé de contrôle de la qualité d'un composant (88) d'une machine, comprenant les étapes de :
- fourniture d'une étiquette électronique (1 ; 101) comprenant un conditionnement (4 ; 104), une première partie de mémoire (14) dans laquelle est stocké un code d'identification de l'étiquette électronique (1 ; 101) et une deuxième partie de mémoire (14, 16) ;
- couplage mécanique du conditionnement (104) de l'étiquette électronique (101) au composant (88) ;
- génération (48, 206) d'un code de vérification en fonction d'au moins une quantité stochastique liée au conditionnement (4 ; 104) ; et
- stockage du code de vérification dans la deuxième partie de mémoire (14, 16) ;
**caractérisé en ce que** ladite au moins une quantité stochastique est liée au couplage mécanique entre le conditionnement (104) de l'étiquette électronique (101) et le composant (88).

7. Procédé selon la revendication 6, comprenant en outre l'étape de lecture (40) du code d'identification de l'étiquette électronique (1 ; 101) ; et dans lequel ladite étape de génération (48, 206) d'un code de vérification est également exécutée en fonction du code d'identification de l'étiquette électronique (1).

8. Procédé selon la revendication 6 ou 7, dans lequel ladite étape de génération (206) d'un code de vérification comprend :
- la détermination (202) d'une mesure de ladite quantité stochastique liée au couplage mécanique entre le conditionnement (104) et le composant (88) ; et
- l'exécution d'un deuxième algorithme (48 ; 58) sur la base de ladite mesure de la quantité stochastique liée au couplage mécanique entre le conditionnement (104) et le composant (88) ;
ledit procédé comprenant en outre les étapes de :
- détermination (214) d'une mesure d'une quantité liée à un couplage mécanique entre le conditionnement d'une étiquette inconnue et un composant inconnu ;
- lecture (232) d'un code de vérification stocké dans l'étiquette inconnue ;
- génération (234) d'un code de vérification lié à l'étiquette inconnue sur la base du deuxième algorithme et de la mesure de la quantité liée au couplage mécanique entre le conditionnement de l'étiquette inconnue et le composant inconnu ; et
- comparaison (236) du code de vérification généré au code de vérification lu.

9. Procédé selon la revendication 8, dans lequel ladite étape de détermination (202) d'une mesure de ladite quantité stochastique liée au couplage mécanique entre le conditionnement (104) et le composant (88) est exécutée au moyen d'un capteur (80) de l'étiquette électronique (101) ; ledit procédé comprenant en outre l'étape de détection (212-224) de la présence d'un capteur de l'étiquette inconnue, ladite étape de détermination (214) d'une mesure d'une quantité liée au couplage mécanique entre le conditionnement de l'étiquette inconnue et le composant inconnu étant exécutée au moyen du capteur de l'étiquette inconnue.
